# EUROPEAN PATENT SPECIFICATION

(11) **EP 1 899 635 B1**
(45) Date of publication and mention of the grant of the patent: **11.04.2012**
(21) Application number: 06732926.8
(22) Date of filing: 20.02.2006
(51) Int. Cl.: F16L 33/22, F16L 37/092

(54) **PIPE COUPLING**
ROHRKUPPLUNG
RACCORD DE TUYAU

(30) Priority: 01.07.2005 NL 1029408
(43) Date of publication of application: 19.03.2008
(73) Proprietor: Wavin B.V., 8011 CW Zwolle (NL)
(72) Inventor: VAN DIJK, Berend, Jan, NL-7776 XA Slagharen (NL); VOS, Bastiaan, NL-9406 VA Assen (NL); SNIJDERS, Johannes, Hendrikus, Gerhardus, NL-7651 RC Tubbergen (NL)
(74) Representative: HOFFMANN EITLE
(86) International application number: PCT/NL2006/000086
(87) International publication number: WO 2006/135227

(56) References cited:
- WO-A-2005/057066
- BE-A- 478 531
- CA-A1- 2 493 695
- DE-A1- 10 212 735
- DE-A1- 19 654 435

## Description

The invention relates to a pipe coupling, comprising:
- a coupling body having a passage opening,
- an outer sleeve, which is arranged partially around the coupling body, these two parts together forming a chamber for accommodating a pipe end, the chamber having an insertion opening for the relevant pipe end at the axially outer end in the outer sleeve, and having stop means for limiting the insertion length of the pipe end into the coupling at the axially inner end in the coupling body,
- a tubular core part which is designed to be accommodated in a pipe end,
- a gripping element which is arranged in the chamber, comprising an outer grip ring for gripping the outer side of the pipe end, and an inner grip ring, arranged concentrically with the outer grip ring, for gripping the inner side of the pipe end, the outer grip ring and the inner grip ring being connected to one another and delimiting an annular space in which, in use, the end part of the pipe end is received.

A pipe coupling of this type is known from DE 196 54 435. This known pipe coupling has a coupling body onto which a union nut is screwed. The coupling body and the union nut together form a chamber into which a pipe end can be fitted. A separate tubular core part is arranged in the chamber. The coupling also comprises a gripping element having an inner grip ring and an outer grip ring. As seen in longitudinal section, the gripping element is U-shaped, with the inner grip ring and the outer grip ring forming the limbs of the U. Barbs or the like extend obliquely towards the rear from these limbs in order to grip the inner side and the outer side of the pipe wall. The gripping element is arranged such that it cannot move within the chamber. When a pipe end is inserted into the known coupling, the barbs will be deformed towards a more axial orientation under the influence of the pipe end, so that the pipe wall can move past them.

If a tensile force is then exerted on the inserted pipe end, the barbs will be deformed into a more radial position under the influence of this tensile force and will engage more deeply in the pipe wall.

It is an object of the invention to provide an alternative pipe coupling.

According to the invention, this object is achieved by a pipe coupling according to the preamble of claim 1, characterized in that the outer sleeve has a radially inwardly narrowing wedge surface, and in that the outer grip ring of the gripping element has an outer surface which is designed to interact with the wedge surface of the outer sleeve in such a manner that when the gripping element is moved axially in the direction of the insertion side, the outer grip ring is forced radially inwards by interaction with the wedge surface, with the result that the outer grip ring grips the outer side of the pipe wall more strongly. Preferably, the outer grip ring is provided with one or more teeth which project substantially in the radial direction and can engage in the pipe surface.

In a preferred embodiment, a wedge surface, which increases in diameter in the direction of the insertion side, is arranged on the core part, it being possible for the inner grip ring, in the event of tensile loading on the pipe end, to slide over the wedge surface in such a manner that the inner grip ring, by interacting with the wedge surface, is forced radially outwards, with the result that the inner grip ring grips the inner side of the pipe end more strongly. Preferably, the inner grip ring is also provided with one or more teeth which project substantially in the radial direction and can engage in the pipe surface.

In a preferred embodiment, the gripping element is formed in one piece, preferably from plastic by means of injection moulding. It is preferable for polyphenysulfone to be used as material for the gripping element, although, for example, glass-filled polyamide or other suitable materials can also be used.

In an advantageous embodiment, one or more spring elements are formed on the gripping element in order to engage on the stop means of the coupling body and to push the outer grip ring onto the wedge surface of the outer sleeve. The one or more spring elements push the gripping element in the axial direction towards the insertion side. As a result, at least the outer grip ring is pressed radially inwards by the associated wedge surface, with the result that if a pipe end has not been inserted, the internal diameter of the outer grip ring is smaller than the external diameter of the pipe for which the coupling is intended. During the insertion of the pipe end into the pipe coupling, the gripping element will be pushed by the pipe end, counter to the spring force of the one or more spring elements, slightly in the axial direction towards the interior of the coupling ('towards the rear'). As a result, the outer grip ring is displaced towards the rear with respect to the wedge surface and the outer grip ring can yield radially outwards slightly, making it easy to insert the pipe end. When the pipe end has been inserted into the coupling, the action of the spring elements will activate the outer grip ring so that it engages on the pipe wall with a defined force. If a wedge surface for the inner grip ring is also arranged on the core part, the inner grip ring is also pushed onto the wedge surface by the spring elements. As a result, the inner grip ring will be forced radially outwards. When the pipe end has been inserted into the coupling, in that case the action of the spring elements will also activate the inner grip ring so that it grips the pipe wall with a defined force. Therefore, the spring elements have the advantage that the action of the gripping element is activated, with the result that it grips the pipe end with greater reliability and with a certain guaranteed force.

Another aspect of the invention provides a gripping element for a pipe coupling, comprising an outer grip ring for gripping the outer side of the pipe end, and an inner grip ring, arranged concentrically with the outer grip ring, for gripping the inner side of the pipe end. The outer grip ring and the inner grip ring are formed in one piece and delimit an annular space in which, in use, the end part of the pipe end is received. The outer grip ring and the inner grip ring are each formed with flexible lips, which extend in the axial direction, are connected to one another and are separated from one another by axial slots which extend between the flexible lips, the flexible lips of the outer grip ring and of the inner grip ring having side faces which each, together with an opposite side face of an adjacent corresponding flexible lip, delimit one of the axial slots. The side faces are each at an angle with respect to a radial extending centrally through the relevant slot, two side faces, which face one another, of the flexible lips of the outer grip ring running towards one another in the radially outwards direction, and two side faces, which face one another, of the flexible lips of the inner grip ring running towards one another in the radially inwards direction.

This form of the flexible lips, with the inclined side faces as described above, ensures that the lips of the outer grip ring can be released radially outwards and that the lips of the inner grip ring can be released radially inwards.

It is also particularly preferred for the width of each slot in the outer grip ring and/or the inner grip ring, as seen in the axial direction from the edge of the free end of the flexible lips, to increase gradually and then to gradually decrease again.

The production of a gripping element of this type in one piece comprises the following method steps:
- injection-moulding the gripping element from plastic, using an injection mould comprising an outer mould part, which is used to form the outer side of the outer grip ring, an inner mould part, which is used to form the inner side of the inner grip ring, and a substantially tubular, intermediate split mould part, which is used to form the outer side of the inner grip ring and the inner side of the outer grip ring, which intermediate mould part comprises a front part, which on both the outer side and the inner side is provided with projecting regions used to form the axial slots between the flexible lips, and a rear part,
- releasing the grip ring from the mould, during which step the outer mould part is removed from the outer side, the inner mould part is removed axially from the inner ring and the front part is pulled a distance axially outwards, after which the two parts of the intermediate mould part are pulled out axially between the inner grip ring and the outer grip ring, the projecting regions, while the front part of the intermediate mould part is being pulled back axially, interacting with the side walls of the flexible lips, with the result that the flexible lips of the inner grip ring are pressed radially inwards and the flexible lips of the outer grip ring are pressed radially outwards.

The grip ring according to this aspect of the invention is easier to release from the mould, since the flexible lips of the outer grip ring and the inner grip ring, when the front part of the intermediate mould part is being pulled out, are automatically pressed outwards or inwards, respectively. This effect is achieved by virtue of the fact that the side walls of the flexible lips are positioned obliquely with respect to the radial, with the result that they can be radially released, and that the projections which form the axial slots are wider in a central region than at the ends, with the result that when the intermediate mould part is being pulled out a wedge action occurs between the mould part and the side faces of the flexible lips, which results in the outer lips being pressed radially outwards and the inner lips being pressed radially inwards. This effect is particularly advantageous if the flexible lips are provided with teeth which are formed by means of cutouts in the intermediate mould part. As a result of the flexible lips being pressed outwards or inwards, the teeth are released from the rear part of the intermediate mould part and the undercut can be released without any risk of the teeth being sheared off or damaged in some other way which adversely affect their action.

The invention will be explained in more detail on the basis of the following description with reference to the drawing, in which:
- Fig. 1: shows a perspective view of a preferred embodiment of a pipe coupling according to the invention,
- Fig. 2: shows a plan view of the pipe coupling from Fig. 1,
- Fig. 3: shows a cross section through the pipe coupling on line A-A from Fig. 2,
- Fig. 4: shows a front view of the pipe coupling from Fig. 1, and
- Fig. 5: shows an axial section through a gripping element for a pipe coupling according to the invention,
- Fig. 6: shows a perspective view of another gripping element,
- Fig. 7: shows a front view of the gripping element from Fig. 6,
- Fig. 8: shows a side view of the gripping element from Fig. 6, Fig. 9 shows an axial cross section of the gripping element from Fig. 6,
- Fig. 9: shows a cross-sectional view of the gripping element from Fig. 6,
- Fig. 10: shows a partial cross section through a mould for producing a gripping element of the type shown in Fig. 6,
- Fig. 11: diagrammatically depicts a perspective view of a section of an intermediate mould part for forming a gripping element of the type shown in Fig. 6, and
- Fig. 12: shows a portion of a rear part of the intermediate mould part from Fig. 11.

Fig..1-4 show a preferred embodiment of a pipe coupling 1 with two insertion sockets 2 for connecting two pipes to one another. The invention also encompasses pipe couplings having only one or more than two insertion sockets 2. Therefore, in the context of the present description, the number of two insertion sockets 2 must be regarded simply as an example. Couplings with sockets for different pipe diameters are also possible.

The pipe coupling 1 is of the type also referred to as an insertion coupling, in which a pipe end is inserted from an insertion side 10 of the insertion socket 2 and is then held directly in the socket 2.

The pipe coupling 1 comprises a coupling body 5 with a passage 3 for medium which is to be transported through the pipe to be coupled. In the embodiment shown, a tubular core part 4, which when the pipe end is inserted in the socket 2 meets the inner side of the pipe end, is formed integrally on the coupling body 5. The core part 4 serves as an internal supporting element for the pipe end both for the sealing action and to absorb part of the axial tensile force. The coupling body 5 with the core part 4 is preferably made from plastic, but may also for example be made from metal.

Furthermore, the pipe coupling 1 comprises an outer sleeve 6. In the embodiment shown, the outer sleeve 6 is click-fitted onto the coupling body 5 by means of a click-fit connection 7. As an alternative to a click-fit connection, it would also be possible to use a threaded connection, in which case the outer sleeve is designed as a union nut. The outer sleeve 6 is preferably produced from plastic by means of injection moulding.

The outer sleeve 6 and the core part 4 delimit an annular chamber 8 in which a pipe end can be received. The axially rear end of the chamber 8, located at the opposite end from the insertion side 10 of the socket 2, is delimited by a stop face 9.

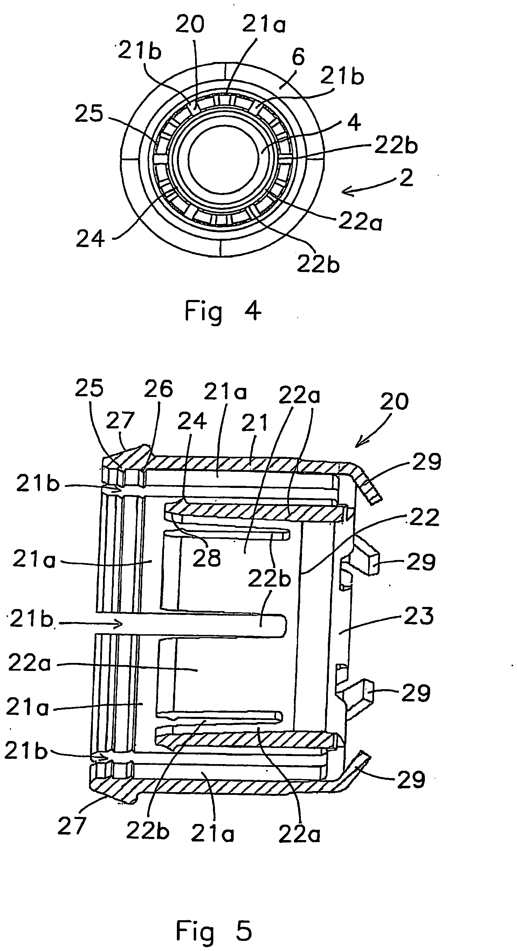

A gripping element 20 is arranged in the chamber 8. The gripping element 20, which is also illustrated separately in Fig. 5, comprises an outer grip ring 21 and an inner grip ring 22, which are arranged concentrically with respect to one another and are connected to one another at the end remote from the insertion side by a connecting wall 23 which extends radially outwards from the inner grip ring 22 to the outer grip ring 21.

The inner grip ring 22 is used to grip the inner side of a pipe end which has been inserted into the socket 2 and for this purpose has one or more gripping teeth 24 on the outer circumference at the end facing towards the insertion side 10 of the socket 2. The outer grip ring 21 is used to grip the outer side of a pipe end inserted into the socket 2 and for this purpose has one or more gripping teeth 25, 26 on the inner circumference at the end facing the insertion side 10 of the socket 2. Preferably, the teeth 24, 25, 26 are not arranged on the axial end of the outer grip ring 21 and the inner grip ring 22, but rather there is an axial continuation of the cylindrical part of the outer grip ring 21 and the inner grip ring 22 beyond the teeth, with the result that the material is supported behind the teeth as seen from the pulling direction and the risk of a chip being cut out of the pipe wall under a high tensile force is reduced.

The outer grip ring 21 is formed with flexible lips 21a which extend in the axial direction and are connected to one another. The flexible lips 21a are separated from one another by axial slots 21b which extend between the flexible lips 21a. The inner grip ring 22 is formed with flexible lips 22a which extend in the axial direction and are connected to one another. The flexible lips 22a of the inner grip ring 22 are separated from one another by axial slots 22b which extend between the flexible lips 22a. In that case, it is also possible to use an embodiment in which the outer grip ring is designed without these axial slots that are not completely continuous and the inner grip ring is designed with such slots, and/or vice versa.

In another embodiment (not shown), the gripping element may be designed with an axial slot which is present over the entire length, i.e. as a split ring, with the result that the gripping element permits tangential deformation. In this case, the gripping element may optionally also be provided with axial slots that are not completely continuous, as described above.

The outer sleeve 4 is provided on the inner side with a wedge surface 11 which narrows radially inwardly towards the insertion side. The wedge surface 11 is preferably conical in form. Another form, for example concave with a slightly increasing angle of inclination, is also possible. The flexible lips 21a of the outer grip ring 21 are provided on the outer side, at the end facing the insertion side 10 of the socket 2, with an inclined surface 27, optionally also with a decreasing angle of inclination, for interacting with the wedge surface 11 of the outer sleeve 6 in such a manner that when the gripping element 20 is moved axially in the direction of the insertion side 10, the outer grip ring 21 is forced radially inwards through interaction with the wedge surface 11, with the result that the teeth 25, 26 of the outer grip ring 21 grip the outer side of the pipe wall of the pipe end that has been inserted into the socket 2 more strongly. Furthermore, the use of the wedge surface 11 prevents the possibility of the pipe end expanding under the influence of, for example, the internal pressure, which could give rise to leaks.

In the assembled state, the inner grip ring 22 is positioned around a substantially cylindrical portion 15 of the core part 4. At an end remote from the insertion side 10, the cylindrical portion 15 is delimited by the stop face 9, and at the opposite end it is delimited by a preferably conical wedge surface 12, the diameter of which increases in the direction of the insertion side 10. The flexible lips of the inner grip ring 22 are provided on the inner side, at the end facing the insertion side 10, with an inclined surface 28 for interacting with the wedge surface 12. In the event of a tensile load on the pipe end, the gripping element 22 can slide with respect to the core part 4 in such a manner that the inclined surface 28 can run up the wedge surface 12. As a result, the inner grip ring 22 is forced radially outwards by interaction with the wedge surface 12, with the result that the inner grip ring 22 grips the inner side of the pipe end more strongly by the teeth 24. On the inner side, incidentally, the wedge surface 12 may likewise have a decreasing angle of inclination.

In general, the insertion couplings of the type described in many cases have to be able to withstand high pressures, high temperatures, and fluctuating pressure and temperature stresses. Failure of the coupling and sealing in practice often leads to major damage. For this reason, therefore, the demands imposed on the type of insertion couplings described are high. Using the wedge surface 11 provides a better ability to withstand tensile stresses in the event of fluctuating temperatures and/or bending forces on the combination of coupling 1 and pipe end compared to the stationary grip rings provided with barbs mentioned in the introduction to the description. Incidentally, the same also applies to the use of the wedge surface 12 on the core part. The coupling according to the invention, by virtue of its specific design, is eminently able to satisfy high practical demands.

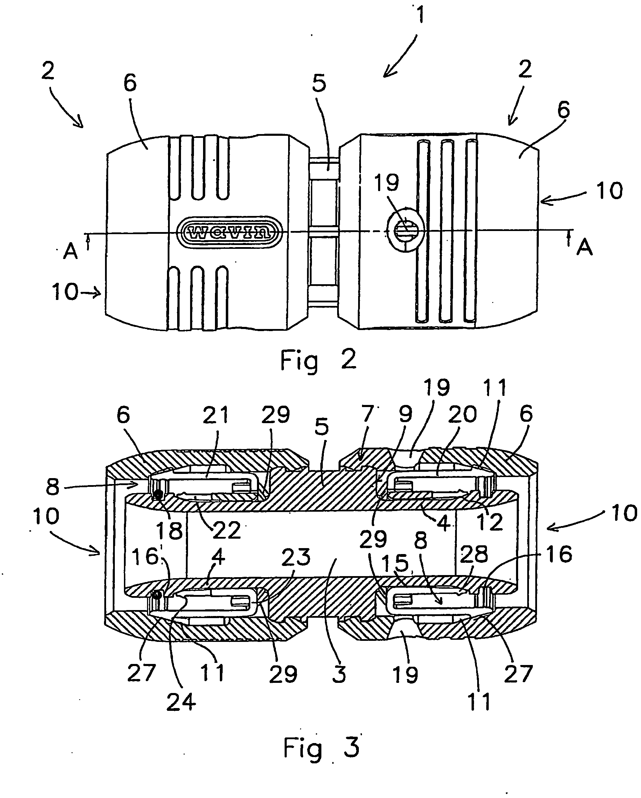

The core part 4 is provided with a groove 16 for receiving a sealing ring 18, preferably an O ring, as shown in the left-hand insertion socket 2 in Fig. 3. The groove 16 for the sealing ring 18 is arranged between the wedge surface 12 and the free end of the core part 4. The groove 16, as seen in the axial direction, is preferably arranged level with the wedge surface 11 of the outer sleeve 4. That end of the lips 21a of the outer grip ring 21 which is provided with the teeth 25, 26 will as a result grip with a clamping acting on the outer side of the pipe end at the location of the sealing ring 18 located on the inner side of the pipe end which has been inserted into the socket 2. This ensures not only a good clamping action but also a good sealing action, since the diameter of the inserted pipe cannot increase despite the internal pressure.

The gripping element 20 has at least one and preferably more, preferably five or six, spring elements in the form of spring lips 29 which extend obliquely towards the rear from the connecting wall 23. Preferably, the spring lips 29 are distributed uniformly over the connecting wall 23 in the tangential direction. In the assembled state, the free ends of the spring lips 29 engage on the stop face 9 and press the gripping element 20 towards the insertion side 10 of the socket 2. As a result, at least the outer grip ring 21 is pressed radially inwards by the associated wedge surface 11, with the result that if a pipe end has not been inserted, the internal diameter of the outer grip ring 21 provided with the teeth 25, 26 at the end is smaller than the external diameter of the pipe for which the coupling 1 is intended. When the pipe end has been inserted into the coupling, the outer grip ring 21, on account of the action of the spring lips 29, will grip the pipe wall with a certain force. During the insertion of the pipe end into the insertion socket 2, the gripping element 20 will be pushed slightly towards the rear by the pipe end, counter to the spring force of the spring lips 29. As a result, the outer grip ring 21 is displaced towards the rear with respect to the wedge surface 11, and the outer grip ring can yield radially outwards slightly and the pipe end can easily be inserted into the socket without the risk of damage to the outer side of the pipe end. The inner clamping ring 22 is also pushed onto the associated wedge surface 12 by the spring lips. As a result, the inner grip ring will be forced radially outwards. When the pipe end has been inserted into the coupling, in that case the inner grip ring will also grip the pipe wall with a certain force under the action of the spring elements 29.

The spring elements 29 ensure that the gripping element 20 grips the pipe end with a certain minimum force. If high axial forces are then exerted on the pipe as a result of internal pressure, fluctuating temperatures or other external forces, the initial resistance to tensile stress is provided, and then the required higher resistance to tensile stress will be realized by the action of the inclined surfaces 27, 28 on the wedge surfaces 11, 12.

Moreover, in the embodiment shown, it is also ensured that the insertion socket 2 always provides a good sealing action, since the outer grip ring always presses on the outer side of the pipe wall with a certain minimum, radially inwardly directed force at the location of the sealing ring 18 arranged on the core part 4.

By suitably selecting the geometry, i.e. the relative dimensions of the inner and outer grip rings 22, 21, associated teeth 24, 25, 26 and wedge surfaces 11, 12, it is possible to influence the distribution of the tensile force over the inner and outer sides as desired, for example 50%-50% or 60%-40% or the like.

The gripping element 20 is preferably formed in one piece. It is preferable for the gripping element 20 to be produced by means of injection moulding from plastic, preferably from polyphenylsulfone (PPSU).

It is preferable for one or more inspection openings 19 to be arranged in the outer sleeve 4, to allow inspection to establish whether the pipe end has been inserted sufficiently far into the socket 2 to ensure good coupling and sealing. It is preferable for the gripping element 20 to be made from transparent material, such as for example PPSU, so that the pipe end can be seen through the inspection opening 19 and through the outer clamping ring 21. Incidentally, this aspect could also be used for insertion couplings in which there is a separate outer clamping ring, optionally in combination with a separate inner clamping ring.

The use of PPSU has the further advantage that the pipe coupling can be used successfully for pipes through which a high-temperature fluid has to be transported. Furthermore, PPSU is harder than materials used for the pipe, such as PE, PP and PB, with the result that the teeth of the grip rings 21, 22 can engage securely in the pipe material. Nevertheless, PPSU still has a sufficient elasticity for it to be possible for the gripping element 20 to be arranged in the coupling socket 2 during preassembly.

In an embodiment which is not shown, it is possible to make the coupling releasable. A screwdriver, a bradawl or another specifically suitable, similar tool can be fitted through the inspection opening 19, optionally with slight enlargement. As a result of the end of this tool being moved axially inwards into the socket, the gripping element is then moved with it and ends of the grip rings 21, 22 can be released from the wedge surfaces 11, 12. In this state, it is then possible for the pipe to be pulled out of the coupling piece.

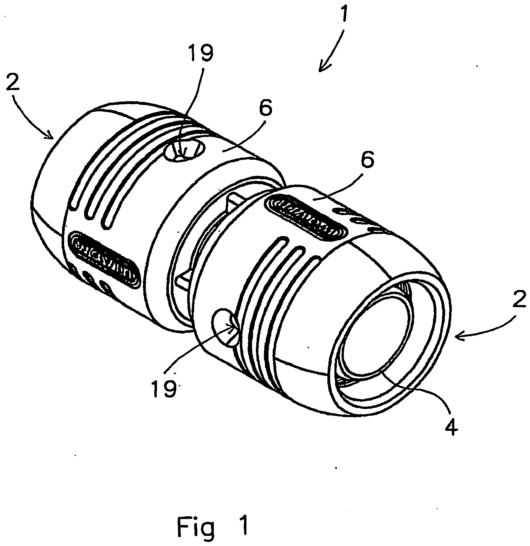

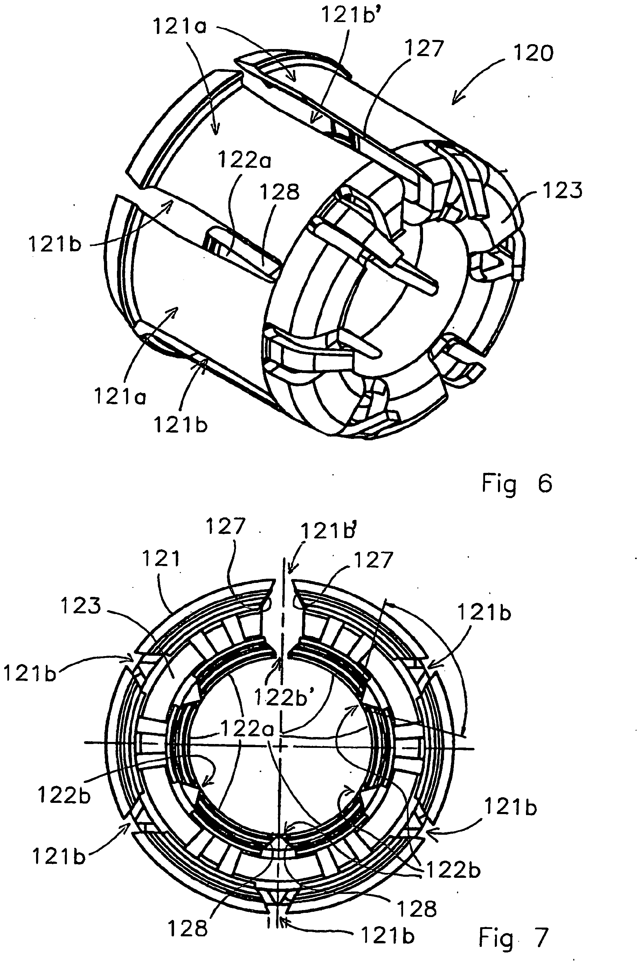

Figs. 6-9 show another gripping element 120 for a pipe coupling of the type shown in Fig. 1. The gripping element 120 comprises an outer grip ring 121 and an inner grip ring 122, which are arranged concentrically with one another and are connected to one another at the end remote from the insertion side by a connecting wall 123 which extends radially outwards from the inner grip ring 122 to the outer grip ring 121.

The inner grip ring 122 is used to grip the inner side of a pipe end that has been inserted into the socket 2 and for this purpose, at the end facing towards the insertion side 10 of the socket 2, has one or more gripping teeth 124 on the outer circumference. The outer grip ring 121 is used to grip the outer side of a pipe end that has been inserted into the socket 2, and for this purpose has a gripping tooth 125 on the inner circumference at the end facing the insertion side 10 of the socket 2. It is preferable for the teeth 124 and 125 not to be arranged at the axial end of the outer grip ring 121 and the inner grip ring 122, but rather for there to be an axial continuation of the cylindrical part of the outer grip ring 121 and the inner grip ring 122 beyond the teeth 124 and 125, with the result that the material is supported behind the tooth, as seen from the direction in which tensile force is exerted, and the risk of a chip being cut out of the pipe wall in the event of a high tensile force is reduced.

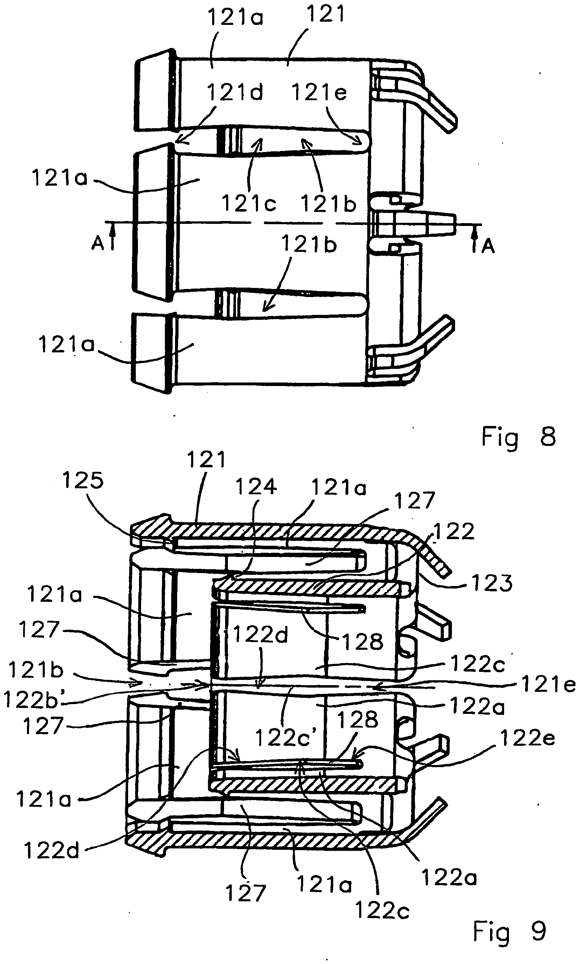

The outer grip ring 121 is formed with flexible lips 121a which extend in the axial direction and are connected to one another. The flexible lips 121a are separated from one another by axial slots 121b which extend between the flexible lips 121a. In the example shown, both the inner ring and the outer ring are completely cut through at the location of one of the slots 121b' and 122b'. The flexible lips 121a of the outer grip ring 121 have side faces 127. The side faces 127, together with an opposite side face 127 of an adjacent, corresponding flexible lip 121a, in each case delimit one of the axial slots 121b. The side faces 127 are each at an angle to a radial 126 extending through the associated slot 121b, with two side faces 127, facing one another, of the flexible lips 121a of the outer grip ring 121 running towards one another in the radially outwards direction, as can be seen most clearly from Fig. 7. The width of each axial slot 121b in the outer grip ring, as seen in the axial direction, gradually increases from the edge of the insertion side of the clamping element 120 and then gradually decreases again, as can be seen most clearly from Figs. 6 and 8. In other words, the axial slots 121b in the outer grip ring have a centre portion 121c which is wider than the end portions 121d and 121e of the slot 121b (cf. Fig. 8).

The inner grip ring 122 is formed with flexible lips 122a which extend in the axial direction and are connected to one another. The flexible lips 122a of the inner grip ring 122 are separated from one another by axial slots 122b which extend between the flexible lips 122a. The flexible lips 122a of the inner grip ring 122 have side faces 128 which each, together with an opposite side face 128 of an adjacent corresponding flexible lip 122a, delimit one of the axial slots 122b. The side faces 128 are each at an angle with respect to a radial extending centrally through the relevant slot 122b, two side faces 128, which face one another, of the flexible lips 122a of the inner grip ring 122 running towards one another in the radially outwards direction, as can be seen most clearly in Fig. 7. The width of each axial slot 122b in the inner grip ring 122 increases gradually as seen in the axial direction from the edge of the insertion side of the clamping element 120 and then gradually decreases again, as can be seen most clearly from Fig. 9. In other words, the axial slots 122b in the inner grip ring 122 have a centre portion 122c which is wider than the end portions 122d and 122e of the slot 122b (cf. Fig. 9).

The gripping element 120 is made from plastic, preferably from PPSU, PSU (polysulfone) or (glass-)filled polyamide, by means of injection moulding. PPSU is the most preferred material, on account of being transparent.

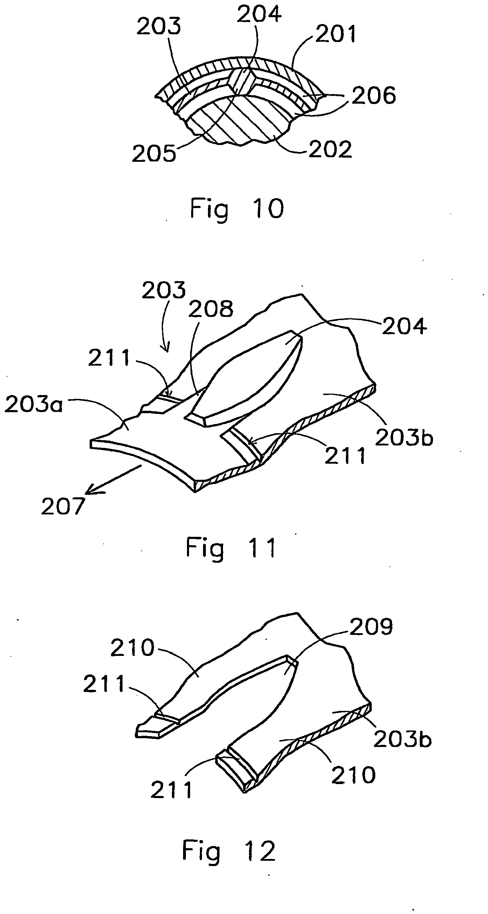

During production, use is made of an injection mould, a diagrammatic cross section through which is shown in Fig. 10. The mould comprises an outer mould part 201, which is used to form the outer side of the outer grip ring 121, an inner mould part 202, which is used to form the inner side of the inner grip ring 122, and a substantially tubular, intermediate mould part 203, which is used to form the outer side of the inner grip ring 122 and the inner side of the outer grip ring 121. Fig. 9 shows a portion of the intermediate mould part 203. The intermediate mould part 203 is what is known as a split mould part and has a front part 203a and a complementary rear part 203b. The front part 203a of the intermediate mould part 203 has axial fingers 208 which are provided on their outer and inner sides with radially projecting regions 204 and 205, respectively, which are used to form the axial slots 121b and 122b between the flexible lips 121a and 122a, respectively. The rear part 203b of the intermediate mould part 203 has axial fingers 210 between which there are cutouts 209 (cf. Fig. 12), in which the axial fingers 208 of the front part 203a fit in complementary fashion. The axial fingers 210 of the rear part 203b are provided on the outer side with grooves 211 which are used to form teeth 125 on the outer grip ring 121. In the same way, grooves (not shown), which are used to form the teeth 124 of the inner grip ring 122, are provided on the inner side of the axial fingers 210. The mould parts 201 to 203 define a mould cavity 206 into which the liquid plastic can be injected under pressure.

After the plastic has sufficiently cooled and set, the gripping element can be released from the mould. This involves removing the outer mould part 201 from the outer side and removing the inner mould part 202 axially from the inner ring 122. The front part 203a of the intermediate mould part 203 with the projections 204, 205 is pushed axially in the direction indicated by the arrow 207. After it has been pushed a few millimetres, the flexible lips 122a of the inner grip ring 122 have been moved radially inwards and the flexible lips 121a of the outer grip ring 121 have been moved radially outwards. This effect is achieved by virtue of the fact that the side walls 127, 128 of the flexible lips 121, 122 are inclined with respect to the radial, with the result that they can be released in the radial direction, and that the projections 204 and 205 which form the axial slots 121b and 122b, respectively, are wider in a central region than at the ends. This shape ensures that when the front part 203a of the intermediate mould part 203 is being moved in the direction in which it is pulled out, a wedge action occurs between the mould part 203 and the side faces 127 and 128 of the flexible lips 121a and 122a, respectively, resulting in the outer lips 121a being pressed radially outwards and the inner lips 122a being pressed radially inwards. As a result of the flexible lips 121a and 122a being pressed outwards and inwards, respectively, while the rear part 203b of the intermediate mould part 203 remains in a stationary position, the teeth 125 and 124 are released from the rear part 203b of the intermediate mould part 203 and the undercut at the grooves in the fingers 210 can be released. Then, the front part 203a and the rear part 203b of the intermediate mould part 203 can together be pulled out of the gripping element 120 without any risk of the teeth 125 and 124 being sheared off or suffering any other form of damage which adversely affects their action.

The gripping element 120 can be used in the same way in a pipe coupling 1 as shown in Figures 1-3. The advantage over the gripping element 20 from Fig. 5 resides in particular in the production engineering aspect.

## Claims

1. Pipe coupling (1), comprising:
- a coupling body (5)having a passage opening (3),
- an outer sleeve (6), which is arranged partially around the coupling body (5), these two parts together forming a chamber (8) for accommodating a pipe end, the chamber (8) having an insertion opening for the relevant pipe end at the axially outer end in the outer sleeve (6), and having stop means (9) for limiting the insertion length of the pipe end into the coupling (1) at the axially inner end in the coupling body (5),
- a tubular core part (4) which is designed to be accommodated in a pipe end,
- a gripping element (20) which is arranged in the chamber (8), comprising an outer grip ring (21) for gripping the outer side of the pipe end, and an inner grip ring (22), arranged concentrically with the outer grip ring (21), for gripping the inner side of the pipe end, the outer grip ring (21) and the inner grip ring (22) being connected to one another and delimiting an annular space in which, in use, the end part of the pipe end is received,
**characterized in that** the outer sleeve (6) has a radially inwardly narrowing wedge surface (11), and **in that** the outer grip ring (21) of the gripping element (20) has an outer surface (27) which is designed to interact with the wedge surface (11) of the outer sleeve (6) in such a manner that when the gripping element (20) is moved axially in the direction of the insertion side (10), the outer grip ring (21) is forced radially inwards by interaction with the wedge surface (11), with the result that the outer grip ring (21) grips the outer side of the pipe wall more strongly.

2. Pipe coupling (1) according to claim 1, in which a wedge surface (12), which increases in diameter in the direction of the insertion side (10), is arranged on the core part (4), and in which the inner grip ring (22), in the event of tensile loading on the pipe end, can slide over said wedge surface (12) in such a manner that the inner grip ring (22), by interacting with the wedge surface (12), is forced radially outwards, with the result that the inner grip ring (22) grips the inner side of the pipe end more strongly.

3. Pipe coupling (1) according to claim 1 or 2, in which the core part (4) is provided on the outer surface with an annular cutout in which the inner grip ring (22) of the gripping element (20) is arranged.

4. Pipe coupling (1) according to one of the preceding claims, in which the inner grip ring (22) and the outer grip ring (21) are connected to one another at one end by a radially extending connecting part (23).

5. Pipe coupling (1) according to one of the preceding claims, in which the inner grip ring and/or the outer grip ring is provided with one or more teeth (24, 25, 26) facing towards the wall of a pipe which is to be inserted.

6. Pipe coupling (1) according to claim 5, in which the teeth (24, 25, 26) are arranged at a distance from the axial end of the outer grip ring (21) and/or inner grip ring (22).

7. Pipe coupling (1) according to one of the preceding claims, in which the gripping element (20) is formed in one piece.

8. Pipe coupling (1) according to claim 7, in which the gripping element (20) is provided with an axial slot (21b, 22b) which is continuous over the entire length.

9. Pipe coupling (1) according to one of the preceding claims, in which the gripping element (20) is made from plastic by injection moulding.

10. Pipe coupling (1) according to one of the preceding claims, in which the gripping element (20) is made from a transparent material.

11. Pipe coupling (1) according to one of the preceding claims, in which the gripping element (20) is made from polyphenylsulfone (PPSU).

12. Pipe coupling (1) according to one of the preceding claims, in which one or more spring elements (29) are formed on the gripping element (20) in order to engage on the stop means (9) and to push the outer grip ring (21) onto the wedge surface (11) of the outer sleeve (6).

13. Pipe coupling (1) according to one of the preceding claims, in which the outer grip ring (21) is formed with flexible lips (21a) which extend in the axial direction and are connected to one another, and which flexible lips (21a) are separated from one another by axial slots which extend between the flexible lips (21a).

14. Pipe coupling (1) according to claim 13, in which the flexible lips (21a) of the outer grip ring (21) are provided on the outer side with an inclined surface (27) to interact with the wedge surface (11) of the outer sleeve (6).

15. Pipe coupling (1) according to one of the preceding claims, in which the inner grip ring (22) is formed with flexible lips (22a) which extend in the axial direction and are connected to one another, and which flexible lips (22a) are separated from one another by axial slots (22b) which extend between the flexible lips (22a).

16. Pipe coupling (1) according to claim 15, in which the flexible lips (22a) of the inner grip ring (22) are provided on the inner side with an inclined surface (28) in order to interact with the wedge surface (12) of the core part (4).

17. Pipe coupling (1) according to one of the preceding claims, in which an inspection opening (19) is arranged in the outer sleeve (6).

18. Pipe coupling according to one of the preceding claims, in which the core part (4) is provided on the outer surface with an annular groove (16), in which is arranged a sealing ring (18) for gripping the inner side of the pipe wall.

19. Pipe coupling (1) according to claim 18, in which the sealing ring (18) is arranged further axially outwards than the inner grip ring (22).

20. Pipe coupling (1) according to claim 19, in which the outer grip ring (21) is formed and positioned in such a manner that in use it engages on the outer side of the pipe end at the location of the sealing ring (18) arranged on the core part (4).

21. Pipe coupling (1) according to one of the preceding claims, in which the outer grip ring (21) and the inner grip ring (22) grip the pipe wall at different locations as seen in the axial direction.

22. Pipe coupling (1) according to one of the preceding claims, in which the core part (4) is formed integrally on the coupling body (5).

23. Pipe coupling (1) according to claims 7, 13 and 15, in which the flexible lips (121a, 122a) of the outer grip ring (121) and of the inner grip ring (122) have side faces (127, 128) which each, together with an opposite side face of an adjacent, corresponding flexible lip, delimit one of the axial slots (121b, 122b), the side faces (127, 128) each being positioned at an angle to a radial extending centrally through the relevant slot (121b, 122b), two side faces (127), which face towards one another, of the flexible lips (121a) of the outer grip ring (121) running towards one another in the radially outwards direction, and two side faces (128), which face one another, of the flexible lips (122a) of the inner grip ring (122) running towards one another in the radially inwards direction.

24. Pipe coupling (1) according to claim 23, in which the width of each slot (121b, 122b) in the outer grip ring (121) and/or the inner grip ring (122), as seen in the axial direction from the edge of the free end of the flexible lips (121a, 122a), increases gradually and then gradually decreases again.

25. Gripping element (20) for a pipe coupling (1), comprising an outer grip ring (121) for gripping the outer side of the pipe end, and an inner grip ring (122), arranged concentrically with the outer grip ring (121), for gripping the inner side of the pipe end, the outer grip ring (121) and the inner grip ring (122) being formed in one piece and delimiting an annular space in which, in use, the end part of the pipe end is received; which outer grip ring (121) and inner grip ring (122) are each formed with flexible lips (121a, 122a), which extend in the axial direction, are connected to one another and are separated from one another by axial slots (121b, 122b) which extend between the flexible lips (121a, 122a), the flexible lips (121a, 122a) of the outer grip ring (121) and of the inner grip ring (122) having side faces (127, 128) which each, together with an opposite side face of an adjacent corresponding flexible lip, delimit one of the axial slots, the side faces (127, 128) each being at an angle with respect to a radial extending centrally through the relevant slot, two side faces (127), which face one another, of the flexible lips (121a) of the outer grip ring (121) running towards one another in the radially outwards direction, and two side faces (128), which face one another, of the flexible lips (122a) of the inner grip ring (122) running towards one another in the radially inwards direction.

26. Gripping element (20) according to claim (25), in which the width of each slot (121b, 122b) in the outer grip ring (121) and/or the inner grip ring (122), as seen in the axial direction from the edge of the insertion end of the gripping element (20), increases gradually and then gradually decreases again.

27. Method for producing a gripping element (20) according to claims 25 and 26 in one piece, comprising the following method steps:
- injection-moulding the gripping element (20) from plastic, using an injection mould comprising an outer mould part (201), which is used to form the outer side of the outer grip ring (121), an inner mould part (202), which is used to form the inner side of the inner grip ring (122), and a substantially tubular, intermediate split mould part (203), which is used to form the outer side of the inner grip ring (122) and the inner side of the outer grip ring (121), which intermediate mould part (203) comprises a front part (203a), which on both the outer side and the inner side is provided with projecting regions (204, 205) used to form the axial slots (121b, 122b) between the flexible lips (121a, 122a), and a rear part (203b),
- releasing the **gripping element** (20) from the mould, during which step the outer mould part (201) is removed from the outer side, the inner mould part (202) is removed axially from the inner ring (122) and the front part (203a)is pulled a distance axially outwards, after which the two parts (203a, 203b) of the intermediate mould part (203) are pulled out axially between the inner grip ring (122) and the outer grip ring (121), the projecting regions (204, 205), while the front part of the intermediate mould part (203) is being pulled back axially, interacting with the side walls of the flexible lips (121a, 122b), with the result that the flexible lips (122a) of the inner grip ring (122) are pressed radially inwards and the flexible lips (121a) of the outer grip ring (121) are pressed radially outwards.

28. Method according to claim 27, in which one or more teeth (124) which face towards the wall of a pipe that is to be inserted are formed on the inner grip ring (122) and/or the outer grip ring (121) by means of cutouts (209) in the intermediate mould part (203).

29. Method according to claim 27 or 28, in which the gripping element (20) is made from polyphenylsulfone (PPSU).

## Patentansprüche

1. Leitungskopplung (1) mit:
einem Kopplungskörper (5) mit einer Durchgangsöffnung (3),
einer äußeren Muffe (6), die teilweise um den Kopplungskörper (5) angeordnet ist, wobei diese zwei Teile zusammen eine Kammer (8) zum Aufnehmen eines Leitungsendes bilden, wobei die Kammer (8) eine Einsetzöffnung für das entsprechende Leitungsende an dem axial äußeren Ende in der äußeren Muffe (6) aufweist und Anschlagmittel (9) zum Begrenzen der Einsetzlänge des Leitungsendes in die Kopplung (1) an dem axial inneren Ende in dem Kopplungskörper (5) aufweist,
einem rohrförmigen Kernteil (4), das gestaltet ist, um in ein Leitungsende aufgenommen zu werden,
einem Greifelement (20), das in der Kammer (8) angeordnet ist und einen äußeren Greifring (21) zum Greifen der äußeren Seite des Leitungsendes und einen inneren Greifring (22), der konzentrisch mit dem äußeren Greifring (21) angeordnet ist, zum Greifen der inneren Seite des Leitungsendes aufweist, wobei der äußere Greifring (21) und der innere Greifring (22) miteinander verbunden sind und einen ringförmigen Raum begrenzen, in dem der Endteil des Leitungsendes bei Verwendung aufgenommen ist,
**dadurch gekennzeichnet, dass** die äußere Muffe (6) eine sich radial nach innen verengende Keiloberfläche (11) aufweist, und dadurch, dass der äußere Greifring (21) des Greifelements (20) eine äußere Oberfläche (27) aufweist, die gestaltet ist, um mit der Keiloberfläche (11) der äußeren Muffe (6) derart wechselzuwirken, dass, wenn das Greifelement (20) axial in die Richtung der Einsetzseite (10) bewegt wird, der äußere Greifring (21) radial nach innen durch Wechselwirkung mit der Keiloberfläche (11) gezwungen wird, mit dem Ergebnis, dass der äußere Greifring (21) die äußere Seite der Leitungswand fester greift.

2. Leitungskopplung (1) nach Anspruch 1, bei der eine Keiloberfläche (12), die im Durchmesser in der Richtung der Einsetzseite (10) zunimmt, an dem Kernteil (4) angeordnet ist und bei welcher der innere Greifring (22) im Falle einer Zugbelastung an dem Leitungsende über die Keiloberfläche (12) derart gleiten kann, dass der innere Greifring (22) durch Wechselwirkung mit der Keiloberfläche (12) radial nach außen gezwungen wird, mit dem Ergebnis, dass der innere Greifring (22) die innere Seite des Leitungsendes fester greift.

3. Leitungskopplung (1) nach Anspruch 1 oder 2, bei der das Kernteil (4) an der äußeren Oberfläche mit einem ringförmigen Ausschnitt versehen ist, in dem der innere Greifring (22) des Greifelements (20) angeordnet ist.

4. Leitungskopplung (1) nach einem der vorhergehenden Ansprüche, bei welcher der innere Greifring (22) und der äußere Greifring (21) an einem Ende durch ein sich radial erstreckendes Verbindungsteil (23) verbunden sind.

5. Leitungskopplung (1) nach einem der vorhergehenden Ansprüche, bei welcher der innere Greifring und/oder der äußere Greifring mit einem oder mehreren Zähnen (24, 25, 26) versehen sind/ist, die zu der Wand einer Leitung zeigen, die eingesetzt werden soll.

6. Leitungskopplung (1) nach Anspruch 5, bei der die Zähne (24, 25, 26) in einem Abstand von dem axialen Ende des äußeren Greifrings (21) und/oder inneren Greifrings (22) angeordnet sind.

7. Leitungskopplung (1) nach einem der vorhergehenden Ansprüche, bei der das Greifelement (20) in einem Stück ausgebildet ist.

8. Leitungskopplung (1) nach Anspruch 7, bei der das Greifelement (20) mit einem axialen Langloch (21b, 22b) versehen ist, das über die gesamte Länge zusammenhängend ist.

9. Leitungskopplung (1) nach einem der vorhergehenden Ansprüche, bei der das Greifelement (20) aus Plastik durch Spritzgießen hergestellt ist.

10. Leitungskopplung (1) nach einem der vorhergehenden Ansprüche, bei der das Greifelement (20) aus einem transparenten Material hergestellt ist.

11. Leitungskopplung (1) nach einem der vorhergehenden Ansprüche, bei der das Greifelement (20) aus Polyphenylensulfon (PPSU) hergestellt ist.

12. Leitungskopplung (1) nach einem der vorhergehenden Ansprüche, bei der ein oder mehrere Federelemente (29) an dem Greifelement (20) ausgebildet sind, sodass sie an dem Anschlagmittel (9) in Eingriff kommen und den äußeren Greifring (21) auf die Keiloberfläche (1) der äußeren Muffe (6) drücken.

13. Leitungskopplung (1) nach einem der vorhergehenden Ansprüche, bei welcher der äußere Greifring (21) mit biegbaren Lippen (21a) ausgebildet ist, die sich in die axiale Richtung erstrecken und miteinander verbunden sind und die voneinander durch axiale Langlöcher getrennt sind, die sich zwischen den biegbaren Lippen (21a) erstrecken.

14. Leitungskopplung (1) nach Anspruch 13, bei der die biegbaren Lippen (21a) des äußeren Greifrings (21) an der äußeren Seite mit einer geneigten Oberfläche (27) vorgesehen sind, sodass sie mit der Keiloberfläche (11) der äußeren Muffe (6) wechselwirken.

15. Leitungskopplung (1) nach einem der vorhergehenden Ansprüche, bei welcher der innere Greifring (22) mit biegbaren Lippen (22a) ausgebildet ist, die sich in die axiale Richtung erstrecken und miteinander verbunden sind und die voneinander durch axiale Langlöcher (22b) getrennt sind, die sich zwischen den biegbaren Lippen (22a) erstrecken.

16. Leitungskopplung (1) nach Anspruch 15, bei der die biegbaren Lippen (22a) des inneren Greifrings (22) an der inneren Seite mit einer geneigten Oberfläche (28) vorgesehen sind, sodass sie mit der Keiloberfläche (12) des Kernteils (4) wechselwirken.

17. Leitungskopplung (1) nach einem der vorhergehenden Ansprüche, bei der eine Kontrollöffnung (19) in der äußeren Muffe (6) angeordnet ist.

18. Leitungskopplung (1) nach einem der vorhergehenden Ansprüche, bei der das Kernteil (4) an der äußeren Oberfläche mit einer ringförmigen Nut (16) versehen ist, in der ein Dichtungsring (18) zum Greifen der inneren Seite der Leitungswand angeordnet ist.

19. Leitungskopplung (1) nach Anspruch 18, bei welcher der Dichtungsring (18) weiter axial nach außen als der innere Greifring (22) angeordnet ist.

20. Leitungskopplung (1) nach Anspruch 19, bei welcher der äußere Greifring (21) derart gebildet und positioniert ist, dass er bei Verwendung an der äußeren Seite des Leitungsendes an einer Stelle des Dichtungsrings (18) in Eingriff kommt, der an dem Kernteil (4) angeordnet ist.

21. Leitungskopplung (1) nach einem der vorhergehenden Ansprüche, bei welcher der äußere Greifring (21) und der innere Greifring (22) die Leitungswand an verschiedenen Stellen greifen, wie in der axialen Richtung betrachtet.

22. Leitungskopplung (1) nach einem der vorhergehenden Ansprüche, bei der das Kernteil (4) integral an dem Kopplungskörper (5) ausgebildet ist.

23. Leitungskopplung (1) nach Ansprüchen 7, 13 und 15, bei der die biegbaren Lippen (121a, 122a) des äußeren Greifrings (121) und des inneren Greifrings (122) Seitenflächen (127, 128) aufweisen, die jeweils, zusammen mit einer gegenüberliegenden Seitenfläche einer angrenzenden, entsprechenden biegbaren Lippe, eines der axialen Langlöcher (121b, 122b) begrenzen, wobei die Seitenflächen (127, 128) jeweils in einem Winkel zu einer Radialen positioniert sind, die sich zentral durch das entsprechende Langloch (121b, 122b) erstreckt, wobei zwei zueinander zeigende Seitenflächen (127) der biegbaren Lippen (121a) des äußeren Greifrings (121) radial nach außen zueinander laufen und zwei zueinander zeigende Seitenflächen (128) der biegbaren Lippen (122a) des inneren Greifrings (122) radial nach innen zueinander laufen.

24. Leitungskopplung (1) nach Anspruch 23, bei der die Weite jedes Langlochs (121b, 122b) in dem äußeren Greifring (121) und/oder dem inneren Greifring (122), wie in der axialen Richtung von dem Rand des freien Endes der biegbaren Lippen (121a, 122a) betrachtet, fortschreitend zunimmt und dann fortschreitend wieder abnimmt.

25. Greifelement (20) für eine Leitungskopplung (1) mit einem äußeren Greifring (121) zum Greifen der äußeren Seite des Leitungsendes und einem inneren Greifring (122), der konzentrisch mit dem äußeren Greifring (121) angeordnet ist, zum Greifen der inneren Seite des Leitungsendes, wobei der äußere Greifring (121) und der innere Greifring (122) in einem Stück gebildet sind und einen ringförmigen Raum begrenzen, in dem bei Verwendung der Endteil des Leitungsendes aufgenommen ist; wobei der äußere Greifring (121) und der innere Greifring (122) jeweils mit biegbaren Lippen (121a, 122a) gebildet sind, die sich in die axiale Richtung erstrecken, miteinander verbunden sind und voneinander getrennt durch axiale Langlöcher (121b, 122b) sind, die sich zwischen den biegbaren Lippen (121a, 122a) erstrecken, wobei die biegbaren Lippen (121a, 122a) des äußeren Greifrings (121) und des inneren Greifrings (122) Seitenflächen (127, 128) aufweisen, die jeweils zusammen mit einer gegenüberliegenden Seitenfläche einer angrenzenden, entsprechenden biegbaren Lippe eines der axialen Langlöcher begrenzen, wobei die Seitenflächen (127, 128) jeweils in einem Winkel in Bezug auf eine Radiale sind, die sich zentral durch das entsprechende Langloch erstreckt, wobei zwei zueinander zeigende Seitenflächen (127) der biegbaren Lippen (121a) des äußeren Greifrings (121) radial nach außen zueinander laufen und zwei zueinander zeigende Seitenflächen (128) der biegbaren Lippen (122a) des inneren Greifrings (122) radial nach innen zueinander laufen.

26. Greifelement (20) nach Anspruch 25, bei dem die Weite jedes Langlochs (121b, 122b) in dem äußeren Greifring (121) und/oder des inneren Greifrings (122), wie in der axialen Richtung von dem Rand des Einsetzendes des Greifelements (20) betracht, fortschreitend zunimmt und dann fortschreitend wieder abnimmt.

27. Verfahren zum Herstellen eines Greifelements (20) nach Ansprüchen 25 und 26 in einem Stück, mit den folgenden Verfahrenschritten:
Spritzgießen des Greifelements (20) aus Plastik, Verwenden einer Spritzgussform mit einem äußeren Gussteil (201), das verwendet wird, um die äußere Seite des äußeren Greifrings (121) zu bilden, einem inneren Gussteil (202), das verwendet wird, um die innere Seite des inneren Greifrings (122) zu bilden, und einem im Wesentlichen rohrförmigen Zwischenaufteilungsgussteil (203), das verwendet wird, um die äußere Seite des inneren Greifrings (122) und die innere Seite des äußeren Greifrings (121) zu bilden, wobei das Zwischengussteil (203) einen Vorderteil (203a), an dem sowohl die äußere Seite als auch die innere Seite mit Vorsprungsbereichen (204, 205) versehen ist, die verwendet werden, um die axialen Langlöcher (121b, 122b) zwischen den biegbaren Lippen (121a, 122a) zu bilden, und einen hinteren Teil (203b) aufweist,
Freisetzen des Greifelements (20) von dem Guss, wobei während dieses Schrittes das äußere Gussteil (201) von der äußeren Seite entfernt wird, das innere Gussteil (202) axial von dem inneren Ring (122) entfernt wird und der Vorderteil (203a) einen Abstand axial nach außen gezogen wird, wonach die zwei Teile (203a, 203b) des Zwischengussteils (203) axial nach außen zwischen den inneren Greifring (122) und den äußeren Greifring (121) gezogen werden, wobei die Vorsprungsbereiche (204, 205), während der Vorderteil des Zwischengussteils (203) axial nach hinten gezogen wird, mit den Seitenwänden der biegbaren Lippen (221a, 122b) wechselwirken, mit dem Ergebnis, dass die biegbaren Lippen (122a) des inneren Greifrings (122) radial nach innen gedrückt werden und die biegbaren Lippen (121a) des äußeren Greifrings (121) radial nach außen gedrückt werden.

28. Verfahren nach Anspruch 27, bei dem ein oder mehrere Zähne (124), die zu der Wand einer Leitung zeigen, die eingesetzt werden soll, an dem inneren Greifring (122) und/oder dem äußeren Greifring (121) mittels Ausschnitten (209) in dem Zwischengussteil (203) gebildet sind.

29. Verfahren nach Anspruch 27 oder 28, bei dem das Greifelement (20) aus Polyphenylensulfon (PPSU) hergestellt ist.

## Revendications

1. Raccord (1) de tuyaux, comprenant :
un corps (5) de raccord ayant une ouverture de passage (3),
un manchon externe (6), qui est partiellement agencé autour du corps (5) de raccord, ces deux parties formant ensemble une chambre (8) pour recevoir l'extrémité d'un tuyau, la chambre (8) ayant une ouverture d'insertion pour l'extrémité du tuyau en question au niveau de l'extrémité axiale externe dans le manchon externe (6), et ayant des moyens d'arrêt (9) pour limiter la longueur d'insertion de l'extrémité du tuyau dans le raccord (1) au niveau de l'extrémité axiale interne dans le corps (5) de raccord,
une partie centrale tubulaire (4) qui est conçue de façon à être reçue dans une extrémité du tuyau,
un élément de serrage (20) qui est agencé dans la chambre (8), comprenant une bague de serrage externe (21) permettant de serrer le côté externe de l'extrémité de tuyau, et une bague de serrage interne (22), agencée de façon concentrique par rapport à la bague de serrage externe (21), permettant de serrer le côté interne de l'extrémité de tuyau, la bague de serrage externe (21) et la bague de serrage interne (22) étant reliées l'une à l'autre et délimitant un espace annulaire dans lequel, en utilisation, la partie d'extrémité de l'extrémité de tuyau est reçue,
**caractérisé en ce que** le manchon externe (6) présente une surface de coin (11) se rétrécissant radialement vers l'intérieur, et **en ce que** la bague de serrage externe (21) de l'élément de serrage (20) présente une surface externe (27) qui est conçue de façon à interagir avec la surface de coin (11) du manchon externe (6) de sorte que, lorsque l'élément de serrage (20) est déplacé axialement dans la direction côté insertion (10), la bague de serrage externe (21) soit poussée radialement vers l'intérieur par interaction avec la surface de coin (11), de façon à ce que la bague de serrage externe (21) serre plus fortement le côté externe de la paroi de tuyau.

2. Raccord (1) de tuyaux selon la revendication 1, dans lequel une surface de coin (12), qui augmente en diamètre dans la direction côté insertion (10), est agencée sur la partie centrale (4), et dans lequel la bague de serrage interne (22), en cas de charge de traction sur l'extrémité de tuyau, peut coulisser sur ladite surface de coin (12) de sorte que la bague de serrage interne (22), par interaction avec la surface de coin (12), soit poussée radialement vers l'extérieur, de façon à ce que la bague de serrage interne (22) serre plus fortement le côté interne de l'extrémité de tuyau.

3. Raccord (1) de tuyaux selon la revendication 1 ou 2, dans lequel la partie centrale (4) est prévue sur la surface externe avec une découpe annulaire dans laquelle est agencée la bague de serrage interne (22) de l'élément de serrage (20).

4. Raccord (1) de tuyaux selon l'une des revendications précédentes, dans lequel la bague de serrage interne (22) et la bague de serrage externe (21) sont reliées l'une à l'autre au niveau d'une extrémité par une partie de liaison (23) s'étendant radialement.

5. Raccord (1) de tuyaux selon l'une des revendications précédentes, dans lequel la bague de serrage interne et/ou la bague de serrage externe est pourvue d'une ou plusieurs dents (24, 25, 26) regardant la paroi d'un tuyau à insérer.

6. Raccord (1) de tuyaux selon la revendication 5, dans lequel les dents (24, 25, 26) sont agencées à une certaine distance de l'extrémité axiale de la bague de serrage externe (21) et/ou de la bague de serrage interne (22).

7. Raccord (1) de tuyaux selon l'une des revendications précédentes, dans lequel l'élément de serrage (20) est formé en une seule pièce.

8. Raccord (1) de tuyaux selon la revendication 7, dans lequel l'élément de serrage (20) est pourvu d'une fente axiale (21b, 22b) qui est continue sur toute la longueur.

9. Raccord (1) de tuyaux selon l'une des revendications précédentes, dans lequel l'élément de serrage (20) est réalisé en matériau plastique par moulage par injection.

10. Raccord (1) de tuyaux selon l'une des revendications précédentes, dans lequel l'élément de serrage (20) est réalisé en matériau transparent.

11. Raccord (1) de tuyaux selon l'une des revendications précédentes, dans lequel l'élément de serrage (20) est réalisé en polyphénylsulfone (PPSU).

12. Raccord (1) de tuyaux selon l'une des revendications précédentes, dans lequel un ou plusieurs éléments (29) à ressort sont formés sur l'élément de serrage (20) afin de s'engager sur le moyen d'arrêt (9) et pousser la bague de serrage externe (21) sur la surface de coin (11) du manchon externe (6).

13. Raccord (1) de tuyaux selon l'une des revendications précédentes, dans lequel la bague de serrage externe (21) est formée de lèvres flexibles (21a) qui s'étendent dans la direction axiale et sont reliées les unes aux autres, et lesquelles lèvres flexibles (21a) sont séparées les unes des autres par des fentes axiales qui s'étendent entre elles.

14. Raccord (1) de tuyaux selon la revendication 13, dans lequel les lèvres flexibles (21a) de la bague de serrage externe (21) sont prévues sur le côté externe avec une surface inclinée (27) afin d'interagir avec la surface de coin (11) du manchon externe (6).

15. Raccord (1) de tuyaux selon l'une des revendications précédentes, dans lequel la bague de serrage (22) est formée de lèvres flexibles (22a) qui s'étendent dans la direction axiale et sont reliées les unes aux autres, et lesquelles lèvres flexibles (22a) sont séparées les unes des autres par des fentes axiales (22b) qui s'étendent entre elles.

16. Raccord (1) de tuyaux selon la revendication 15, dans lequel les lèvres flexibles (22a) de la bague de serrage interne (22) sont prévues sur le côté interne avec une surface inclinée (28) afin d'interagir avec la surface de coin (12) de la partie centrale (4).

17. Raccord (1) de tuyaux selon l'une des revendications précédentes, dans lequel une ouverture d'inspection (19) est agencée dans le manchon externe (6).

18. Raccord de tuyaux selon l'une des revendications précédentes, dans lequel la partie centrale (4) est prévue sur la surface externe avec une rainure annulaire (16), dans laquelle est disposée une bague d'étanchéité (18) pour serrer le côté interne de la paroi du tuyau.

19. Raccord (1) de tuyaux selon la revendication 18, dans lequel la bague d'étanchéité (18) est agencée plus axialement vers l'extérieur que la bague de serrage (22).

20. Raccord (1) de tuyaux selon la revendication 19, dans lequel la bague de serrage externe (21) est formée et positionnée de sorte que, en utilisation, elle s'engage sur le côté externe de l'extrémité de tuyau au niveau de l'emplacement de la bague d'étanchéité (18) agencée sur la partie centrale (4).

21. Raccord (1) de tuyaux selon l'une des revendications précédentes, dans lequel la bague de serrage externe (21) et la bague de serrage interne (22) serrent la paroi de tuyau à différents emplacements tels que vus dans la direction axiale.

22. Raccord (1) de tuyaux selon l'une des revendications précédentes, dans lequel la partie centrale (4) est formée en un seul bloc sur le corps (5) de raccord.

23. Raccord (1) de tuyaux selon les revendications 7, 13 et 15, dans lequel les lèvres flexibles (121a, 122a) de la bague de serrage externe (121) et de la bague de serrage interne (122) présentent des faces latérales (127, 128) dont chacune, conjointement avec une face latérale opposée d'une lèvre flexible correspondante, adjacente délimitent l'une des fentes axiales (121b, 122b), les faces latérales (127, 128) étant chacune positionnée avec un angle par rapport à une radiale s'étendant au centre de la fente (121b, 122b) en question, deux faces latérales (127), qui font face l'une à l'autre, des lèvres flexibles (121a) de la bague de serrage externe (121) s'étendant les unes vers les autres dans la direction radialement vers l'extérieur, et deux faces latérales (128), qui se regardent, des lèvres flexibles (122a) de la bague de serrage interne (122) s'étendant les unes vers les autres dans la direction radialement vers l'intérieur.

24. Raccord (1) de tuyaux selon la revendication 23, dans lequel la largeur de chaque fente (121b, 122b) dans la bague de serrage externe (121) et/ou la bague de serrage interne (122), telle que vue dans la direction axiale à partir du bord de l'extrémité libre des lèvres flexibles (121a, 122a), augmente graduellement et ensuite diminue graduellement de nouveau.

25. Élément de serrage (20) pour un raccord (1) de tuyaux, comprenant une bague de serrage externe (121) pour serrer le côté externe de l'extrémité de tuyau, et une bague de serrage interne (122), agencée de manière concentrique par rapport à la bague de serrage externe (121), pour serrer le côté interne de l'extrémité de tuyau, la bague de serrage externe (121) et la bague de serrage interne (122) étant formées en une seule pièce et délimitant un espace annulaire dans lequel, en utilisation, la partie extrémale de l'extrémité de tuyau est reçue ; lesquelles bague de serrage externe (121) et bague de serrage interne (122) sont chacune formées par des lèvres flexibles (121a, 122a), qui s'étendent dans la direction axiale, sont reliées l'une à l'autre et sont séparées l'une de l'autre par des fentes axiales (121b, 122b) qui s'étendent entre les lèvres flexibles (121a, 122a), les lèvres flexibles (121a, 122a) de la bague de serrage externe (121) et de la bague de serrage interne (122) présentant chacune des faces latérales (127, 128) qui, conjointement avec une face latérale opposée d'une lèvre flexible correspondante adjacente, délimitent une des fentes axiales, les faces latérales (127, 128) étant chacune agencée avec un angle par rapport à une extension radiale passant au centre de la fente en question, deux faces latérales (127) en vis-à-vis, des lèvres flexibles (121a) de la bague de serrage externe (121) s'étendant les unes vers les autres dans la direction radiale vers l'extérieur, et deux faces latérales (128), qui se regardent, des lèvres flexibles (122a) de la bague de serrage interne (122) s'étendant les unes vers les autres dans la direction radiale vers l'intérieur.

26. Elément de serrage (20) selon la revendication 25, dans lequel la largeur de chaque fente (121b, 122b) dans la bague de serrage externe (121) et/ou la bague de serrage interne (122), en regardant dans la direction axiale à partir du bord de l'extrémité d'insertion de l'élément de serrage (20), augmente graduellement et ensuite diminue graduellement de nouveau.

27. Procédé de production d'un élément de serrage (20) selon les revendications 25 et 26 en une seule pièce, comprenant les étapes de procédé suivantes :
moulage par injection de l'élément de serrage (20) à partir d'un matériau plastique, en utilisant un moule à injection comprenant une partie de moule externe (201), qui est utilisée pour former le côté externe de la bague de serrage externe (121), une partie de moule interne (202), qui est utilisée pour former le côté interne de la bague de serrage interne (122), et une partie de moule divisée (203) intermédiaire, essentiellement tubulaire, qui est utilisée pour former le côté externe de la bague de serrage interne (122) et le côté interne de la bague de serrage externe (121), laquelle partie de moule intermédiaire (203) comprend une partie avant (203a), qui est, à la fois sur le côté externe et le côté interne, pourvue de régions (204, 205) en saillie utilisées pour former les fentes axiales (121b, 122b) entre les lèvres flexibles (121a, 122a), et une partie arrière (203b),
libération de l'élément de serrage (20) du moule, pendant cette étape la partie de moule externe (201) est retirée du côté externe, la partie de moule interne (202) est retirée axialement de la bague interne (122) et la partie avant (203a) est tirée sur une distance axialement vers l'extérieur, après quoi les deux parties (203a, 203b) de la partie de moule intermédiaire (203) sont retirées axialement entre la bague de serrage interne (122) et la bague de serrage externe (121), les régions (204, 205) en saillie, tandis que la partie avant de la partie de moule intermédiaire est tirée axialement vers l'arrière, interagissant avec les parois latérales des lèvres flexibles (121a, 122b), de façon à ce que les lèvres flexibles (122a) de la bague de serrage interne (122) soient pressées radialement vers l'intérieur et les lèvres flexibles (121a) de la bague de serrage externe (121) soient pressées radialement vers l'extérieur.

28. Procédé selon la revendication 27, dans lequel une ou plusieurs dents (124) qui font face à la paroi d'un tuyau qui doit être inséré sont formées sur la bague de serrage interne (122) et/ou la bague de serrage externe (121) au moyen de découpes (209) dans la partie de moule intermédiaire (203).

29. Procédé selon la revendication 27 ou 28, dans lequel l'élément de serrage (20) est réalisé en polyphénysulfone (PPSU).
